# EUROPEAN PATENT APPLICATION

(11) **EP 3 312 145 A1**
(43) Date of publication of application: **25.04.2018**
(21) Application number: 16194984.7
(22) Date of filing: 21.10.2016
(51) Int. Cl.: C01G 51/04, C01G 53/04, C01F 7/30

(54) **PROCESS FOR PREPARATION OF METAL OXIDES NANOCRYSTALS AND THEIR USE FOR WATER OXIDATION**

(71) Applicant: Studiengesellschaft Kohle mbH, 45470 Mülheim (DE)
(72) Inventor: Deng, Xiaohui, 45470 Muelheim (DE); Tüysüz, Harun, 45470 Muelheim (DE)

(57) **Abstract**

The present application refers to a process for preparing of nanostructured metal oxides such as cobalt oxide and transition metal incorporated cobalt oxides and nickel aluminium oxides and nickel metal supported on aluminium oxide using plant material such as spent tea leaves as a hard template and the use of such catalysts for water oxidation.

## Description

The present application refers to a process for preparation of nanostructured metal oxides such as cobalt oxide and transition metal incorporated cobalt oxides, aluminium oxide and mixed nickel aluminium oxide using plant leave material such as spent tea leaves as a hard template and the use of such catalysts for water oxidation.

Nanostructured materials provide exceptional physical and chemical properties in comparison to their bulk counterparts in a range of application including in catalysis. Since a higher amount of surface active sites is favourable in catalysis, numerous efforts have been devoted to the development of nano-sized or nanostructured metal oxides.

The synthetic methodologies that have been established can be divided into two categories, namely top-down and bottom-up approach. In top-down approach, materials in larger size or domain are broken down into nanostructures while in bottom-up approach the nanomaterials are assembled by atoms, molecules or clusters.

In terms of top-down approach, a well-developed method in this category is the hard-templating approach to prepare mesoporous high surface area materials. In the typical procedure of hard-templating, a silica hard template has to be produced as the first step. Afterwards, the metal precursor is impregnated and loaded in the pore structure of silica after the solvent is completely evaporated. Then calcination is often necessary to decompose the precursor and obtain crystalline oxides. As the final step, silica needs to be removed by concentrated alkaline solution. Although mesoporous materials with high surface area and porous structure can be prepared following this approach, it is considered to be time consuming and work intensive since it involves multiple steps. Thus, a facile and economical method to prepare templated nanostructured materials is still highly desirable for various applications.

In the present invention, the inventors have developed the preparation of nanostructured metal based mixed oxides using a hard template derived from leave materials such as spent tea leaves. Following an impregnation-calcination and template removal pathway, sheet-like structures consisting of nano-sized crystallites of Co₃O₄ and Cu, Ni, Fe and Mn incorporated Co₃O₄ (M/Co = 1/8 atomic ratio), Al₂O₃, NiO/Al₂O₃ are obtained from such leave material. Co₃O₄ nanocrystals could be further reduced to CoO and metallic cobalt by using ethanol vapor as a mild reduction agent by maintaining the nanostructure. Furthermore, reduction of NiO/Al₂O₃ with H₂ results in nanostructured Ni/Al₂O₃ that has a broad application for many industrial hydrogenation reactions.

The obtained crystallites are thoroughly characterized using X-ray diffraction, electron microscopy, and N₂-sorption. The method was further found to be applicable when other materials such as commercial tea leaves were used as hard templates. The oxides are then tested for electrochemical water oxidation and Cu, Ni and Fe incorporation show beneficial effect on the catalytic activity of Co₃O₄. Moreover, the water oxidation activity of Ni-Co₃O₄ can be significantly enhanced by continuous potential cycling and outstanding stability is demonstrated for 12 h.

Tea is the most widely consumed drink in the world after water, and massive amounts of spent tea leaves (STL; over 5 million tons produced annually (Food and Agriculture Organization of the United Nations, 2013)) have been produced as a result of the mass production of bottled and canned tea drinks. Since the disposal of such waste has become an issue to be faced with, the repurpose and utilization of the STL is much more favored, but on the other hand, it is a challenging task. Several research efforts have been made on this subject.

Taking this into mind, the inventors started to utilize the spent tea leaves as hard template to synthesis nanostructured electrocatalyst. Through a simple impregnation-calcination process, crystalline Co₃O₄ and Cu, Ni, Fe and Mn incorporated Co₃O₄ (M/Co 1/8) were obtained and further materials making use of the oxides of Si, Al and Ti and mixtures thereof. Electron microscopy studies showed that the final products displayed sheet-like structures consisting of nano-sized crystallites. The materials were then tested as catalysts for electrochemical water oxidation and it was found that Cu, Fe and Ni incorporated cobalt oxides exhibited enhanced water oxidation activity while introduction of Mn cations showed detrimental effects. Moreover, the activity of Ni-Co₃O₄ was significantly improved after continuous potential cycling and the performance was stable for 12 h under constant-current electrolysis.

Thus, the present invention is directed to a process for preparing a structured metal oxide, comprising the steps of:
a) Impregnating a plant material derived from preferably broken plant leaves with the solution of at least one metal salt;
b) Drying the obtained impregnated plant material;
c) Subjecting the impregnated plant material to a high temperature treatment in the range of 150 to 400 °C under an oxygen containing atmosphere, whereby at least one metal salt is converted into the respective metal oxide;
d) Subjecting the impregnated plant material to a further high temperature treatment in the range of 400 to 1000 °C whereby the plant material is combusted; and preferably
e) Cooling down the obtained structured metal oxide to room temperature.

In one embodiment, the used plant material can be any plant material which is suitable for being impregnated with the solution of the metal salt. The plant material can be derived from broken plant leaves such as tea leaves, more preferably spent tea leaves, but can be any leaf material including cellulosic materials.

In one embodiment, the tea leaves have been pretreated before use by extraction with a solvent until no soluble components are extracted by the solvent, preferably water.

In step a), the plant material may be impregnated with an aqueous solution of the at least one metal salt which may be selected from a catalytically active metal salt of a metal selected from the group Ti, V, Cr, Mn, Fe, Co, Ni, Cu, Zn, Al, Mo, Se, Sn, Pt, Ru, Pd, W, Ir, Os, Rh, Nb, Ta, Pb, Bi, Au, Ag, Sc, Y, Bi, Sb, in particular Co, Cu, Ni, Fe, Mn, Si, Al, or mixtures thereof.

The obtained structured metal oxide or oxides which may be partially reduced to the metal, may preferably be Al₂O₃, NiO/Al₂O₃, Co₃O₄, transition metal (Cu, Ni, Fe, Mn) incorporated cobalt oxide, CoO and Co/CoO.

The drying step b) and the high temperature treatment step c) may be carried out as a one-step treatment by increasing the temperature at a ramping rate sufficient to dry the impregnated material before at least one metal salt is completely converted into the respective metal oxide. The ramping rate may be in the range of 1 K/min to 10 K/min.

In a further embodiment, the high temperature treatment steps c) and d) may be carried out as a one-step treatment at a ramping rate allowing the conversion of the metal salt to the metal oxide to be completed before the combustion of the plant material. The ramping rate may be in the range of 1 K/min to 10 K/min.

In a further advanced embodiment of the process of the present invention, the impregnated plant material is subjected to a one step temperature treatment comprising, in the order of drying, conversion of the metal salt to a metal oxide and combustion of the plant material in the order as defined before whereby the temperature treatment is carried out at a ramping rate sufficient to allow drying and conversion before the temperature conditions for the next step are reached. The ramping rate may be in the range of 1 K/min to 10 K/min.

The obtained structured metal oxide or oxides which may be partially reduced to the metal, may preferably be Al₂O₃, NiO/Al₂O₃, Co₃O₄, transition metal (Cu, Ni, Fe, Mn) incorporated cobalt oxides, CoO and Co/CoO.

In order to remove any undesired impurities, the product obtained in step d) may be subjected to a treatment with a diluted acid, preferably diluted hydrochloric acid in order to remove acid soluble salts, and subsequent washing steps with water.

The product obtained in step d) or e) may be subjected to a post treatment with a reducing agent, preferably a gaseous reducing agent such as hydrogen or ethanol vapor in order to reduce at least part of the metal oxide to the pure metal.

The invention is furthermore directed to the structured metal oxide obtainable by the inventive process and the use thereof as catalyst or carrier of a catalytically active metal in chemical processes, in particular for water oxidation.

Thus, the present invention is also directed to process for enhancing the activity of a structured metal oxide as electrocatalyst for water oxidation wherein a structured metal oxide is subjected to a cyclic voltammetry in an alkaline electrolyte, preferably in a concentration of at least 0,1 M, more preferably a KOH electrolyte, preferably with an applied potential in the range of 0.7-1.6 V vs RHE (Reversible Hydrogen Electrode), preferably with a scan rate of 50 mV/s.

In one embodiment of the process, the structured metal oxide is a Ni-Co based structured metal oxide which is preferably obtainable by the inventive process.

The invention is further illustrated by the attached Figures and subsequent Examples.

In the Figures, the following is illustrated:
Figure 1. TEM images of STL templated Co₃O₄ and Cu, Ni, Fe, Mn incorporated mixed oxides.
Figure 2. SEM images (a, b), cross-section SEM image(c) and HRTEM image (d) of STL templated Ni-Co₃O₄.
Figure 3. Wide angle XRD patterns of STL templated Co₃O₄ and Cu, Ni, Fe, Mn incorporated mixed oxides.
Figure 4. N₂-sorption isotherms (a) and pore size distribution (b) of STL-templated Co₃O₄ and mixed oxides. The isotherms are plotted with an offset of 30 cm³/g.
Figure 5. TEM images of STL-templated Co₃O₄ prepared using the large scale synthesis (60 g dried leaves, 750 mL water, 30 g of cobalt nitrate hexahydrate).
Figure 6. TEM images of templated Co₃O₄ prepared from various commercial tea species. (a, b) Chinese green tea; (c, d) Westcliff^{®} Pfefferminze (peppermint tea);
(e, f) Westcliff^{®} Salbei (herbal tea); (g, h) Westcliff^{®} Earl Grey (black tea) and( i, j) Westcliff^{®} Melisse (herbal tea). The values of the measured BET surface areas are shown in the figures.
Figure 7. Thermogravimetric analysis of pre-treated tea leaves.
Figure 8. XRD patterns and TEM images of CoO (a,c) and Co/CoO composite material (b,d) prepared by reduction of Co₃O₄ under different atmospheres.
Figure 9. TEM images of as-prepared Ni-Al oxide (a,b) and samples obtained after reduction at 300 °C for 2 h (c,d), 500 °C for 4 h (e,f) and 900 °C for 4 h (g,h).
Figure 10. XRD patterns of obtained materials after Ni-Al oxide being reduced at various temperatures.
Figure 11. N₂ sorption isotherms of obtained materials after Ni-Al oxide being reduced at various temperatures. The isotherms are plotted with an offset of 100 cm³/g.
Figure 12. TEM image (a) and oxygen evolution linear scan (b) of Co₃O₄ obtained from direct thermal decomposition of cobalt nitrate hexahydrate. The linear scan of STL-templated Co₃O₄ is shown for comparison as the black trace.
Figure 13. a) Initial oxygen evolution linear scans, b) Tafel plots and c) Cyclic voltammetry curves of tea leave-templated Co₃O₄ and Cu, Ni, Fe, Mn incorporated mixed oxides in 1 M KOH electrolyte (catalyst loading ~0.12 mg/cm²).
Figure 14. a) Stabilized oxygen evolution linear scans of tea leaf-templated Co₃O₄ and Cu, Ni, Fe, Mn incorporated mixed oxides in 1 M KOH electrolyte (catalyst loading ~0.12 mg/cm²) after CV measurements. b) Detailed linear scan comparison of Ni-Co₃O₄ (before and after activity) with pristine Co₃O₄. c) Tafel plots derived from Figure 5c and d) Controlled-current electrolysis of activated Ni-Co₃O₄ by applying a current density of 10 mA/cm² for 12 h.
Figure 15. Illustrated formation process of metal oxide nanocrystals templated from spent tea leaves (STL).

### Experimental Section

### Material characterization:

All of the chemicals and reagents were purchased from Sigma Aldrich and used without further purification. Wide angle XRD patterns collected at room temperature were recorded on a Stoe theta/theta diffractometer in Bragg-Brentano geometry (Cu Kα1/2 radiation). The measured patterns were evaluated qualitatively by comparison with entries from the ICDD-PDF-2 powder pattern database or with calculated patterns using literature structure data. TEM images of samples were obtained with an H-7100 electron microscope (100 kV) from Hitachi. EDX spectroscopy was conducted on Hitachi S-3500N. The microscope is equipped with a Si(Li) Pentafet Plus-Detector from Texas Instruments. HR-TEM and SEM images were taken on HF-2000 and Hitachi S-5500, respectively. Samples for cross section images were prepared on 400 mesh Au-grids in the following way: 1. Two-step embedding of the sample in Spurr resin (hard mixture). 2. Trimming with "LEICA EM TRIM". 3. Sectioning with a 35° diamond-knife at a "REICHERT ULTRA-CUT" microtome. 4. Transferring from the water surface area on a lacey-film/400mesh Au-grid. N₂-sorption isotherms were measured with an ASAP 2010 adsorption analyser (Micrometrics) at 77 K. Prior to the measurements, the samples were degassed at 150 °C for 10 h. Total pore volumes were determined using the adsorbed volume at a relative pressure of 0.97. BET surface areas were determined from the relative pressure range between 0.06 and 0.2. Pore size distribution curves were calculated by the BJH method from the desorption branch.

### Synthesis of tea leaf-templated Co₃O₄ and transition metal doped Co₃O₄:

The tea leaves (Goran Mevlana, Ceylon Pure Leaf Tee) were first treated in a Soxhlet extractor with boiled water for 48 hours and then dried at 90 °C before being used as templates. Alternatively, the spent tea leaves could be used directly without any treatment. In a typical templating process, the aqueous solution of metal salt precursors was added to the treated tea leaves and the mixing was conducted at room temperature for 2 h. The weight ratio of tea to metal salt was 2 to 1 throughout this experiment. Afterwards, the mixture was dried at 60 °C and the obtained solid was calcined at 550 °C for 4 h with a ramping rate of 2 °C/min. Finally the product was obtained after being washed with 0.1 M HCl solution and cleaned with deionized water.

In the large scale synthesis of Co₃O₄, the tea leaves were first cleaned using hot water until no color was visible in the tea water. After drying, 60 g of dried tea leaves were used as the templates. To make the cobalt precursor solution, 30 g of cobalt nitrate hexahydrate were dissolved in 750 mL deionized water. Then the solution was added to the tea leaves and the mixing was conducted using gentle stirring for 2 h. Afterwards the mixture was heated at 70 °C until the water was completely evaporated. In the final step, the cobalt loaded tea leaves were calcined and the obtained solids were cleaned following the same procedure.

The same synthesis protocol was also applied to the following commercial tea leaves without variation on the experimental conditions: Chinese green tea, Westcliff^{®} Pfefferminze (peppermint tea), Westcliff^{®} Salbei (herbal tea), Westcliff^{®} Earl Grey (black tea) and Westcliff^{®} Melisse (herbal tea).

### Synthesis of tea leaf-templated CoO and Co/CoO composite materials:

Pure phase nanostructured CoO was obtained by reducing Co₃O₄ under ethanol/argon flow (100 mL/min). In detail, N₂ was purged from the bottom of a round-bottom flask contains ~ 200 mL absolute ethanol and the flow was further directed to a tube furnace. The reaction was completed in 4 h at 270 °C. The Co/CoO composite material was prepared by reducing Co₃O₄ with 5% H₂/argon flow (100 ml/min) at 300 °C for 4 h. The sample was then slowly oxidized in 1% O₂/argon atmosphere.

### Synthesis of Tea leave templated Al₂O₃:

2g of treated tea leave are impregnated with 1 g of Al(NO₃)₃·6H₂O. After drying at 60 °C overnight, the solid mixture is calcined at 550 °C for 4 h (ramping rate 2 K/min). Finally the sample is washed with 0.1 M HCl solution and cleaned with water.

### Synthesis of Tea leaves templated Ni-Al oxide:

2g of treated tea leave are impregnated with 0.5 g of Al(NO₃)₃·6H₂O and 0.5 g of Ni(NO₃)₂·6H₂O. After drying at 60 °C overnight, the solid mixture is calcined at 550 °C for 4 h (ramping rate 2 K/min). Finally the sample is washed with 0.1 M HCl solution and cleaned with water.

### Reduction procedure of Ni-Al oxide:

Synthesized Ni-Al oxide was treated by 5% H₂/argon flow (100 ml/min) at temperatures of 300 °C for 2 h, 500 °C for 4h, 900 °C for 4h with a ramping rate of 2 °C/min.

### Electrochemical measurements:

Electrochemical water oxidation measurements were carried out in a three-electrode configuration (Model: AFMSRCE, PINE Research Instrumentation) with a hydrogen reference electrode (HydroFlex^{®}, Gaskatel) and Pt wire as counter electrode. 1 M KOH was used as the electrolyte and argon was purged through the cell to remove oxygen before each experiment. The temperature of the cell was kept at 298 K by a water circulation system. Working electrodes were fabricated by depositing target materials onto glassy carbon (GC) electrodes (5 mm in diameter, 0.196 cm² surface area). The surface of the GC electrodes was polished with Al₂O₃ suspension (5 and 0.25 µm, Allied High Tech Products, INC.) before use. 4.8 mg catalyst was dispersed in a mixed solution of 0.75 ml H₂O, 0.25 ml isopropanol and 50 µL Nafion (5% in a mixture of water and alcohol) as the binding agent. Then the suspension was sonicated for 30 min to form a homogeneous ink. After that, 5.25 µL of catalyst ink was dropped on GC electrode and then dried under light irradiation. The catalyst loading was calculated to be 0.12 mg/cm² in all cases. All linear scans were collected in a rotating disc electrode configuration by sweeping the potential from 0.7 V to 1.7 V vs. RHE with a rate of 10 mV/ s and rotation of 2000 rpm. Cyclic voltammetry measurements were carried out in the potential range between 0.7-1.6 V vs RHE with a scan rate of 50 mV/s. The nickel containing electrocatalysts were activated by conducting long-term CV measurements until the linear scan was stabilized. In all measurements, the IR drop was compensated at 85%. Stability tests were carried out by controlled current electrolysis in 1 M KOH electrolyte where the potential was recorded at 10 mA/cm² over a time period of 12 h. The reproducibility of the electrochemical data was checked on multiple electrodes.

### Results and Discussion

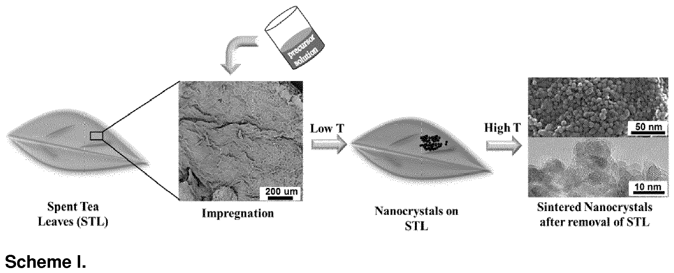

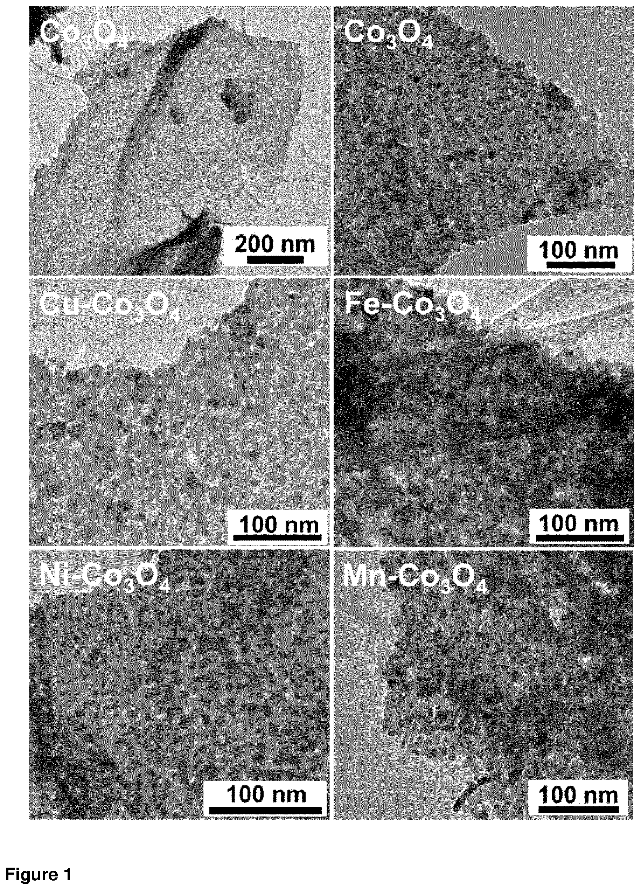

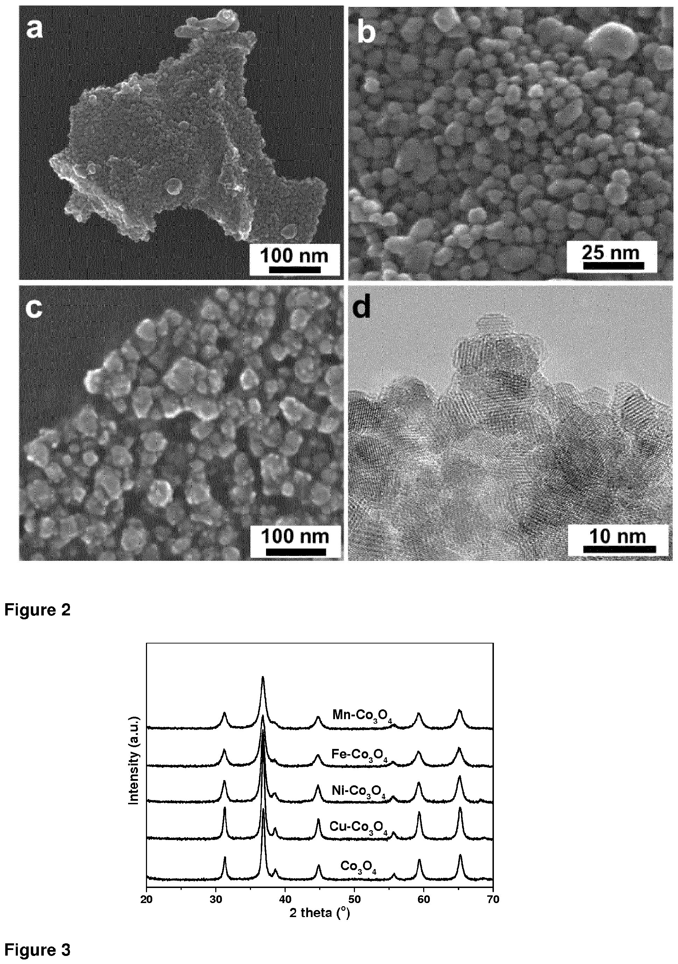

Herein, the utilization of spent tea leaves (STL) as hard templates to prepare cobalt oxide and mixed oxide nanocrystal is presented. The morphology of the as-prepared STL-templated oxides after calcination was first characterized using electron microscopy. As seen from the low magnification TEM images (Figure 1), all samples exhibit a unique nanostructure which consists of nano-sized crystallites. After calcination, the obtained nanoparticles of metal oxides are sintered in all cases and that results in a sheet-like nanostructure. This was further supported by SEM investigation of the morphology of Ni-Co₃O₄ (Figure 2a and b). One can clearly see well-packed nanoparticles that are connected to form a sheet-like nanostructure with a domain size of few hundred nanometers. The size of the particles are in the range of 10 ~ 15 nm. The sintering of particles is also shown in the cross-section image (Figure 2c). Moreover, the high resolution TEM image of Ni-Co₃O₄ (Figure 2d) displays distinct atomic planes in various directions, indicating a high degree of poly-crystallinity.

The crystal structure of the as-prepared Co₃O₄ and mixed oxides was then examined using wide-angle X-ray diffraction and the patterns are shown in Figure 3. As seen, tea leaf-templated cobalt oxide showed distinct reflections at 31.2°, 36.7°, 38.4°, 44.7°, 55.6°, 59.2° and 65.2° 2 theta values. This can be assigned to spinel structure of Co₃O₄ with cobalt atoms located at both tetrahedral and octahedral centers. Once the second transition metal species were introduced into the oxides, the XRD patterns displayed characteristic reflections at same positions as pure cobalt oxide, indicating the cobalt atoms in the spinel structure were successfully substituted by incorporated metal cations without forming additional phases was formed. However, the substituted cobalt sites vary depending on the incorporated metal species. According to the literature, in Ni and Cu-Co₃O₄, the tetrahedrally coordinated Co²⁺ is substituted by Cu²⁺, while in Fe and Mn incorporated Co₃O₄, the octahedrally coordinated Co³⁺ is substituted. Moreover, the broadness of the reflection peaks suggests the nano-crystallinity of all samples although the average crystal size for obtained oxides was different. As calculated using the Scherrer equation, the average crystal size of pure Co₃O₄ was 13 nm and the value for Cu, Ni, Fe and Mn incorporated Co₃O₄ were determined to be 15, 12, 9 and 8 nm respectively. In the case of Ni-Co₃O₄, the calculated particle size was in good agreement with the electron microscopic investigation (Figure 1 and 2).

In order to confirm the successful incorporation of the second metal species, elemental analysis was conducted to gain information on the material composition as well as the possible residues that can be left from the tea leaves. Besides carbon, tea leaves contain other elements such as Ca, Mg, Na, Al, S, P, Mn and their elemental composition might vary depending on the type and nature of the tea.⁴⁸ After the calcination of tea/metal precursor composites, one should note that the treatment of the calcined materials with diluted HCl is necessary in the inventor's case since a small amount of CaCO₃ was present after calcination at 500 °C. Table S1 shows the elemental analysis results of the HCl treated Co₃O₄ and mixed oxides that were conducted using energy dispersive spectroscopy in a scanning electron microscope.

| Element | Cu-Co₃O₄ | Element | Ni-Co₃O₄ | Element | Fe-Co₃O₄ | Element | Mn-Co₃O₄ |
|---|---|---|---|---|---|---|---|
| | Atom% | | Atom% | | Atom% | | Atom% |
| O | 59.64 | O | 57.80 | O | 58.95 | O | 61.19 |
| Mg | 0.49 | P | 0.19 | Mg | 0.49 | Mg | 0.49 |
| Al | 0.69 | Al | 0.73 | Al | 0.70 | Al | 0.69 |
| Si | 0.17 | Si | 0.24 | Si | 0.15 | Si | 0.22 |
| S | 0.17 | S | 0.19 | S | 0.25 | S | 0.10 |
| Ca | 0.35 | Ca | 0.46 | Ca | 0.84 | Ca | 0.55 |
| Mn | 0.12 | Mn | 0.09 | Mn | 0.11 | Cu | 0.1 |
| Co | 36.53 | Co | 36.01 | Co | 34.33 | Co | 31.90 |
| Cu | 1.84 | Ni | 4.29 | Fe | 3.84 | Mn | 4.56 |

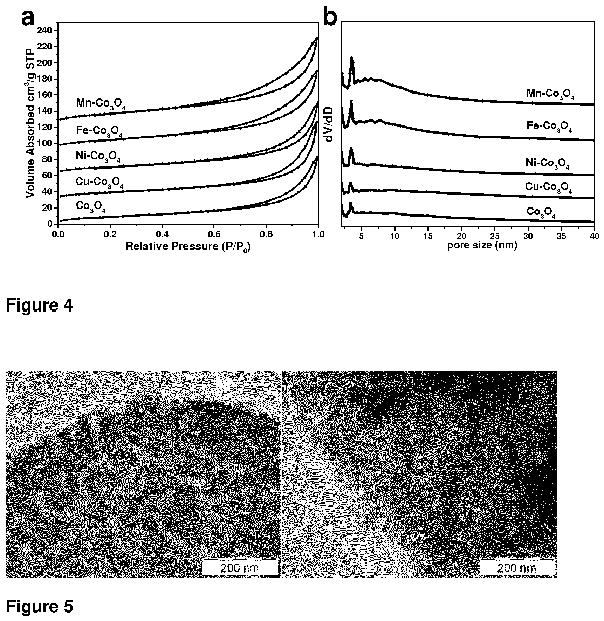

Although residues such as Al, S, P, Mg and Ca were detected in the final products, the total atomic ratio was lower than 3%. More importantly, the relative ratio of the incorporated transition metal cations to the cobalt cations matched well with the expected value (1/8) except in the case of Cu, where a relative ratio of 1/20 was obtained instead. This is due to the reason that a small amount of CuO phase was formed during calcination. Since HCl solution dissolves CuO in the cleaning step, the copper content in the sample is significantly lower. The textural parameters of the templated metal oxides were further determined using N₂ sorption measurements and the isotherms are depicted in Figure 4a. As presented, all materials show type IV isotherms which are characteristic for mesoporous materials. The calculated BET surface area of Co₃O₄ and the mixed oxides shows clear correlation with the crystal size calculated from XRD patterns as Mn-Co₃O₄ showed the highest BET surface area of 63 m²/g, nearly doubled that of pure cobalt oxide (34 m²/g) and Cu doped counterpart (35 m²/g). Ni and Fe incorporated cobalt oxide have BET surface areas of 40 m²/g and 53 m²/g respectively. The pore size distribution as determined from the desorption branches of isotherms are plotted in Figure 4b. As shown, all samples possess pores with the size between 3 and 4 nm. This can be attributed to the space between neighboring nanocrystals.

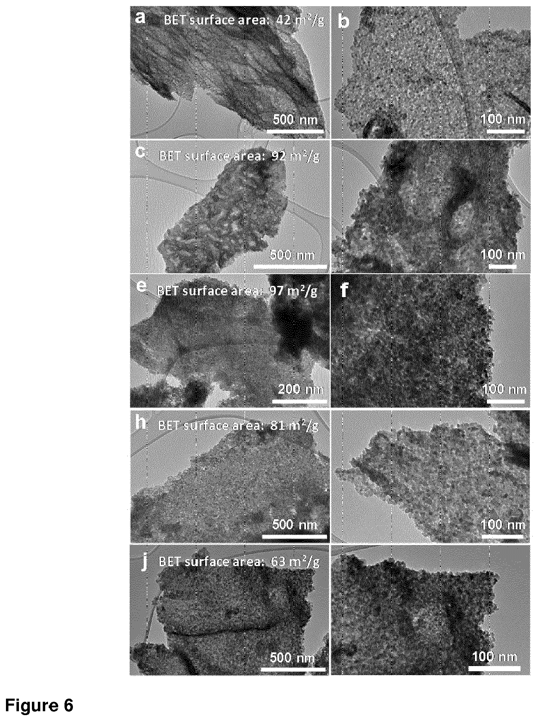

Moreover, this preparation method can be easily scaled up and Co₃O₄ with the same morphology (Figure 5) and textural parameters was acquired when 60 g of tea leaves were used as the templates. More than 8 g of Co₃O₄ with the BET surface area of ~ 40 m²/g was obtained as the final product. In order to investigate the applicability of the synthesis protocol, 5 other commercially available tea species (refer to experimental for details) were selected and used as hard templates. As can be seen from Figure 6, Co₃O₄ as the final product in all cases shows similar nanostructure with distinguishable nanocrystals. The measured BET surface areas for these samples are in the range of 60 ~ 90 m²/g, depending on the tea species.

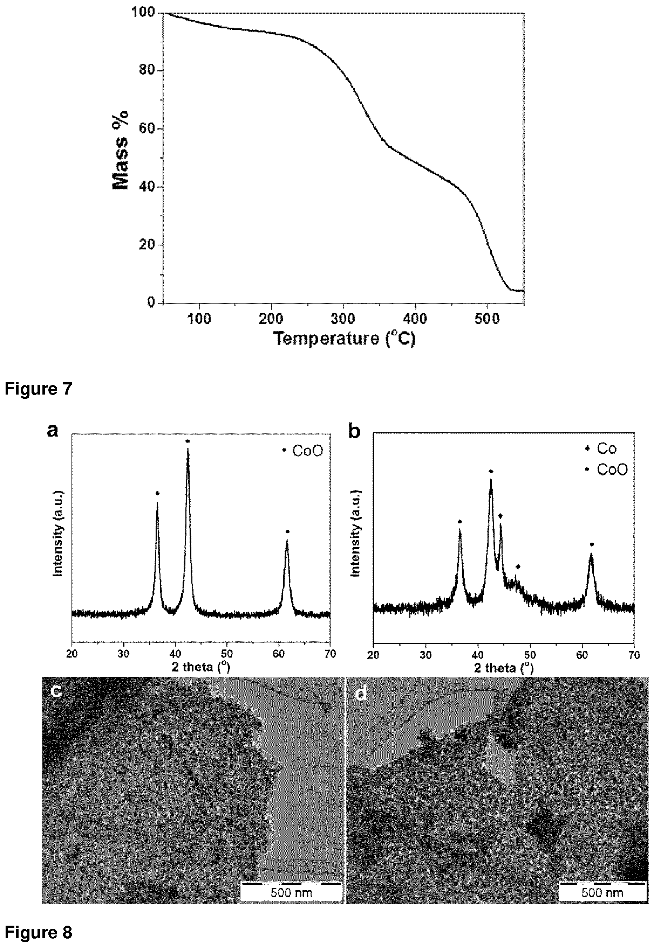

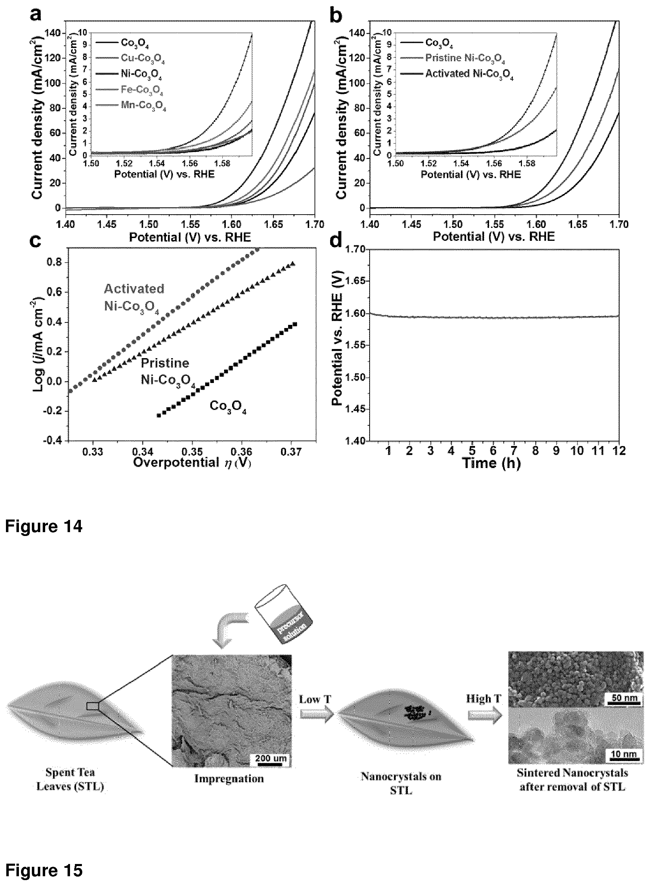

The data presented above suggest the successful replication of mixed transition metal oxides using spent tea leaves as the hard template. The formation of such nanostructures is illustrated in Figure 15. The tea leaves were first intensively treated in boiled water. Afterwards, the transition metal precursors were impregnated on treated tea leaves (SEM image shown in Figure 15) using water as the solvent. Upon immersion into the water, the leaves tend to swell and accommodate the metal precursors. Besides, due to the pretreatment process, additional porosity is likely to be created that is beneficial for the absorption of metal cations due to the release of organic compounds. Once the water is evaporated, calcination is applied to obtain crystalline oxides and meanwhile remove the template. By considering the results from electron microscopy studies, the inventors propose that the nanoparticles are first formed on STL from the thermal decomposition of metal precursors. Due to the role of the substrate, the particles were well-packed and the 'sheet-like' nanostructure was already present at the first stage. Afterwards, the tea leaves, which mostly consist of carbon, were combusted at higher temperatures and thus the nanostructured of metal oxides was maintained. One key aspect concerning this process is that the decomposition temperature of the metal nitrates has to be higher than combustion temperature of tea leaves. Otherwise the hard template (STL in this case) will vanish prior to the formation of metal oxides and this will lead to the formation of larger particles. Therefore, the combustion temperature of the tea leaves was checked using thermogravimetric analysis. As shown in Figure 7, no clear weight loss was observed at temperatures lower than ~ 260 C. Since the decomposition temperature of metal nitrates was reported to be lower, the inventors could be confident that the formation of interconnected nanoparticles already took place before the removal of tea template at higher calcination temperatures.

The transformation of Co₃O₄ to pure phase CoO and Co/CoO composite was also performed by reduction under ethanol/Ar and 5% H₂/Ar flow. The crystalline phases were characterized by XRD and the TEM images show that the nanostructure of the starting Co₃O₄ was preserved through the reduction process (Figure 8). Furthermore, this method can be applied to prepare NiO/Al₂O₃ and, when the materials is treated with H₂ at different temperatures, mixture of NiO/Ni and pure metallic Ni nanoparticle supported on Al₂O₃ could be prepared.

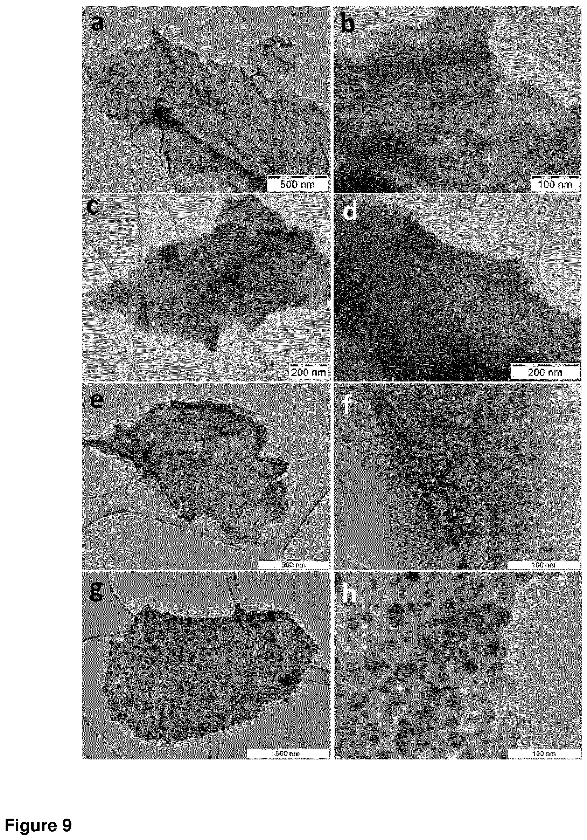

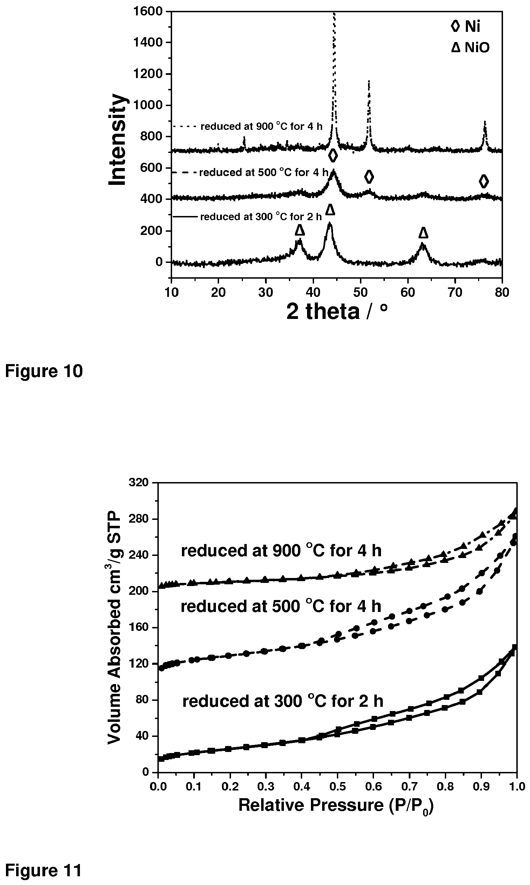

As can be observed, the as-prepared Ni-Al mixed oxide shows NiO phase and aggregated nanoparticles can be seen from the TEM images (Figure 9a, b). After reduction at 300 °C for 2 h, the XRD pattern (Figure 10) did not show any change, suggesting the reduction condition is not sufficient to obtained metallic Ni. When the reduction temperature was increased to 500 °C, after 4 h a mixed phase of NiO and metallic Ni was observed from the XRD pattern. It is worth pointing out that the broad reflection of metallic Ni indicates crystallites in nano size and it is difficult to see from the TEM images (Figure 9e, f). However, when the mixed oxide was reduced at even higher temperature (900 °C for 4h), the reflection of Ni became much sharper and particles in the size of 5~20 nm can be observed clearly from TEM images (Figure 9g, h).

The BET surface areas of Ni Al mixed oxides reduced at different temperatures are measured by N₂ sorption. The isotherms are shown in Figure 11. As calculated, the BET surface areas are around 100 m²/g for samples reduced at 300 °C and 500 °C while a lower surface area of 38 m²/g was measured when the mixed oxide was reduced at 900 °C for 4 h.

### Electrocatalyst Test

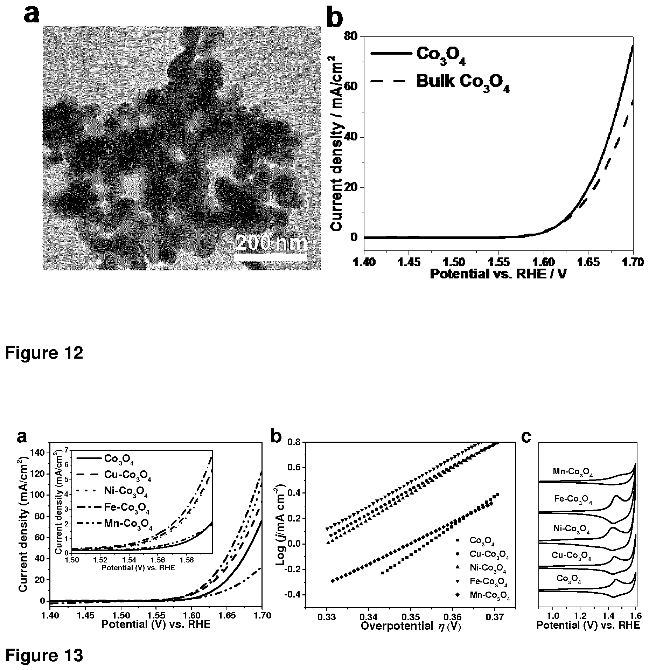

In order to indicate the application of prepared nanocrystals, the materials were tested as electrocatalysts for water oxidation. The catalytic activity towards electrochemical water oxidation was then evaluated following the benchmark protocol proposed by Jaramillo's group. The measurements were carried out in a three-electrode configuration and the catalyst was dropcast onto the glassy carbon electrode with a loading of 0.12 mg/cm² in all cases. The comparison was first made between STL templated Co₃O₄ and bulk Co₃O₄ which was obtained from the direct thermal decomposition of Co(NO₃)₂·6H₂O. As shown in Figure 12, direct calcination of cobalt precursor resulted in Co₃O₄ with a particle size of 60 ~ 80 nm. In terms of water oxidation activity, although a similar onset potential was shown in both samples, STL templated Co₃O₄ exhibited higher current density and lower Tafel slopes than its bulk counterpart. This clearly demonstrates the advantage of using STL as the template. Figure 13a depicts the initial linear sweep voltammetry (LSV) curves of Co₃O₄ and mixed oxides collected in 1 M KOH electrolyte. As shown, the influence of transition metal cations on the OER activity of cobalt oxide was clearly present, as Mn showed detrimental effect while Cu, Ni and Fe doped ones exhibited enhanced activity over pristine Co₃O₄ to similar extent. To reach a current density of 10 mA/cm², pure Co₃O₄ requires an overpotential of 401 mV, which is comparable to the benchmarked nanoparticulate water oxidation catalyst. In comparison, the overpotential negatively shifted to 382 mV for Cu(Ni)-Co₃O₄ and 378 mV for Fe-Co₃O₄ respectively, indicating enhanced water oxidation activity and this matches well with the inventor's previous study on ordered mesoporous materials and other research work conducted on transition metal oxides. The OER kinetics were investigated and the Tafel plots of as-made catalyst are depicted in Figure 13b. As calculated, the highest Tafel slope was 63 mV/dec in the case of Mn-Co₃O₄, indicating relatively sluggish OER kinetics. Pure Co₃O₄ and other mixed oxides showed Tafel slopes in the range of 45 ~ 53 mV/dec, being in good agreement with values obtained from cobalt-based nanoparticulate OER catalysts. The cyclic voltammetry curves of as-made catalyst in 1 M KOH were also collected. As shown in Figure 13c, all samples exhibit one redox couple with a broad anodic peak prior to the onset of water oxidation reaction. This is correlated with the formation of oxyhydroxide species and oxidation of Co(III) to Co(IV). As shown, Mn-doped Co₃O₄ showed much lower oxidation current compared with others, indicating that the oxidation of cobalt cations to higher valence was strongly inhibited by the addition of Mn cations despite the highest BET surface area. On the contrary, the oxidation peak of Fe-Co₃O₄ and Ni-Co₃O₄ was significantly larger than that of Co₃O₄, suggesting higher population of active sites and this can be related with relatively higher surface area. However, the enhanced OER activity should not be fully correlated with this factor as the CV curve of Cu-Co₃O₄ showed nearly identical shape as Co₃O₄ but the former exhibited higher OER activity. The interaction between Co and metal dopants should also be taken into account as the active property of metal cations can be altered due to the local environment generated by neighboring metal atoms. Furthermore, the incorporation of the second metal can also increase the conductivity of catalyst and in turn facilitate the charge transfer.

Since continuous cyclic voltammetry scans can be regarded as an approach for monitoring the material variation during the reaction and evaluating the material's stability, the inventors cycled the electrocatalyst in the same electrolyte from 0.7 V to 1.6 V vs. RHE with a scan rate of 50 mV/s and collected the linear scan afterwards. As plotted in Figure 14a, after conducting the cyclic voltammetry, pristine Co₃O₄ showed nearly identical polarization curves as the initial one, indicating good chemical stability under alkaline condition. Slight deactivation was observed in the case of Fe and Cu doped Co₃O₄ as the overpotential at *j* = 10 mA/cm² shifted to 394 and 385 mV respectively. Interestingly, in the case of Ni-Co₃O₄, it was found that the catalyst was gradually activated during the CV measurements. Upon further activation, the performance was stabilized and the current density of 10 mA/cm² was reached at an overpotential of 368 mV. The direct comparison of the linear scan with that of Co₃O₄ and its non-activated counterpart are shown in Figure 14b. To be more specific, the activated Ni-Co₃O₄ reached a current density of 3.79 mA/cm² at η = 0.35 V, being 4.6 times higher than that of Co₃O₄. The turnover frequency was then calculated based on the assumption that all the metal atoms on the GC electrode are electrochemically active and a TOF of 0.0064 s⁻¹ was obtained for activated Ni-Co₃O₄. The Tafel slope also decreased from 50 mV/dec to 38 mV/dec, indicating substantially enhanced OER kinetics (Figure 14c). Moreover, the activated catalyst demonstrated outstanding stability in constant current electrolysis as the overpotential required to reach 10 mA/cm² remained at ~ 365 mV for at least 12h (Figure 14d).

As it can be seen from the above, it was demonstrated for the first time that by using spent tea leaves as the hard template, metal oxides such as Al₂O₃, NiO/Al₂O₃, Co₃O₄ and transition metal (Cu, Ni, Fe, Mn) incorporated cobalt oxides could be prepared by a simple impregnation-calcination procedure. After a post treatment reduction process Ni/Al₂O₃, CoO and Co/CoO nanocrystals could be prepared as well. Electron microscopic studies revealed that all products possess a unique nanostructure which was constructed by nano-sized crystallites in the size of ~ 10 nm. TG measurement suggested that the tea leaves first functioned as the hard template for the formation of nanoparticles and then were removed by combustion at higher temperatures. As proof of concept, prepared oxides were then tested for electrochemical water oxidation and the Cu, Ni and Fe incorporated cobalt oxides were found to exhibit higher activity than pristine and non-templated Co₃O₄. Moreover, Ni-Co₃O₄ was found to be significantly activated after continuous potential cycling and the performance remained stable for at least 12 h. Furthermore, these classes of new nanostructured materials have large potential to find applications in various fields of research and industry.

## Claims

1. Process for preparing a structured metal oxide, comprising the steps of:
a) Impregnating a plant material derived from preferably broken plant leaves with the solution of at least one metal salt;
b) Drying the obtained impregnated plant material;
c) Subjecting the impregnated plant material to a high temperature treatment in the range of 150 to 400 °C under an oxygen containing atmosphere for a time sufficient to convert the at least one metal salt into the respective metal oxide;
d) Subjecting the impregnated plant material to a further high temperature treatment in the range of 400 to 1000 °C whereby the plant material is removed; and
e) Cooling down the obtained structured metal oxide to room temperature.

2. Process according to claim 1 wherein the used broken plant material is derived from tea leaves, preferably spent tea leaves.

3. Process according to claim 2 wherein the tea leaves have been pretreated before use by extraction with a solvent until no soluble components are extracted by the solvent, which is preferably water.

4. Process according to any of the preceding claims wherein the plant material is impregnated with an aqueous solution of the at least one metal salt.

5. Process according to any of the preceding claims wherein the at least one metal salt is selected from a catalytically active metal salt of a metal selected from the group Ti, V, Cr, Mn, Fe, Co, Ni, Cu, Zn, Al, Mo, Se, Sn, Pt, Ru, Pd, W, Ir, Os, Rh, Nb, Ta, Pb, Bi, Au, Ag, Sc, Y, Bi, Sb, in particular Co, Cu, Ni, Fe, Mn, Si, Al, Ti, or mixtures thereof.

6. Process according to any of the preceding claims wherein the drying step b) and the high temperature treatment step c) are carried out as a one-step treatment by increasing the temperature at a ramping rate sufficient to dry the impregnated material before the at least one metal salt is completely converted into the respective metal oxide.

7. Process according to any of the preceding claims wherein the high temperature treatment steps c) and d) are carried out as a one-step treatment at a ramping rate allowing the conversion of the metal salt to the metal oxide to be completed before the combustion of the plant material.

8. Process according to any of the preceding claims wherein the product obtained in step d) is subjected to a treatment with a diluted acid, preferably with a diluted hydrochloric acid in order to remove acid soluble salts, and subsequently washed with water.

9. Process according to any of claims 1 to 8 wherein the obtained structured metal oxide or oxides which may be partially reduced to the metal, is selected from Al₂O₃, NiO/Al₂O₃, Co₃O₄, transition metal (Cu, Ni, Fe, Mn) incorporated cobalt oxides, CoO and Co/CoO.

10. Process according to any of the preceding claims wherein the product obtained in step d) or e) is subjected to a post treatment with a reducing agent, preferably a gaseous reducing agent such as hydrogen or ethanol vapor.

11. Structured metal oxide obtainable by the process of any of claims 1 to 10.

12. Use of the structured metal oxide obtainable by the process of any of claims 1 to 9 as catalyst or carrier of a catalytically active metal in chemical processes.

13. Use of the structured metal oxide obtainable by the process of any of claims 1 to 9 as catalyst for water oxidation.

14. Process for enhancing the activity of a structured metal oxide as electrocatalyst for water oxidation wherein a structured metal oxide, preferably of claim 11, is subjected to a cyclic voltammetry in an alkaline electrolyte, preferably a KOH electrolyte,preferably with an applied potential in the range of 0.7-1.6 V vs RHE, preferably with a scan rate of 50 mV/s.

15. Process according to claim 14 wherein the structured metal oxide is a Ni-Co based electrocatalyst, obtainable by the process of any claims 1 to 9.
